(19) Europäisches Patentamt
European Patent Office
Office européen des brevets

(11) EP 2 412 426 A1

(12) EUROPÄISCHE PATENTANMELDUNG

(43) Veröffentlichungstag:
01.02.2012 Patentblatt 2012/05

(51) Int Cl.:
*B01D 67/00* (2006.01)        *B01D 69/08* (2006.01)
*B01D 69/14* (2006.01)        *D01D 5/24* (2006.01)

(21) Anmeldenummer: 10008206.4

(22) Anmeldetag: 06.08.2010

(84) Benannte Vertragsstaaten:
AL AT BE BG CH CY CZ DE DK EE ES FI FR GB GR HR HU IE IS IT LI LT LU LV MC MK MT NL NO PL PT RO SE SI SK SM TR
Benannte Erstreckungsstaaten:
BA ME RS

(30) Priorität: 30.07.2010 EP 10007958

(71) Anmelder: Schaefer Kalk GmbH & Co. KG
D-65582 Diez (DE)

(72) Erfinder:
• Vogel, Roland Dr.
01239 Dresden (DE)

• Hinüber, Claudia
01157 Dresden (DE)
• Vucak, Marijan Dr.
65624 Altendiez (DE)
• Nover, Christoph Dr.
47495 Rheinberg (DE)

(74) Vertreter: Luderschmidt, Schüler & Partner
Patentanwälte
John-F.-Kennedy-Strasse 4
65189 Wiesbaden (DE)

(54) **Poröse Hohlfaser**

(57) Poröse Hohlfaser, umfassend erste Poren, die
■ eine mittlere Länge im Bereich von 0,045 $\mu$m bis 120 $\mu$m und
■ eine mittlere Breite im Bereich von 0,030 $\mu$m bis 20 $\mu$m, jeweils gemessen in Faserrichtung, aufweisen,

wobei das Verhältnis von mittlerer Länge der ersten Poren zur mittleren Breite der ersten Poren mindestens 1,5 : 1 ist,
wobei die Hohlfaser weiterhin zweite Poren umfasst, die
■ eine mittlere Länge im Bereich von 0,1 nm bis 99 nm und
■ eine mittlere Breite im Bereich von 1 nm bis 20000 nm, jeweils gemessen in Faserrichtung, aufweisen,

wobei das Verhältnis von mittlerer Länge der zweiten Poren zur mittleren Breite der zweiten Poren höchstens 1: 1,5 ist.

Bevorzugte Anwendungsgebiete der porösen Hohlfaser umfassen ihre Verwendung in Füllungen, in selektiv permeablen Membranen, für die Immobilisierung von Enzymen und/oder Zellen, zur Hämodialyse sowie zur Speicherung von Wasserstoff.

Fig. 1

EP 2 412 426 A1

**Beschreibung**

Die vorliegende Erfindung betrifft poröse Hohlfasern, die mindestens ein vorzugsweise teilkristallines Polymer umfassen, sowie Verfahren zu ihrer Herstellung und ihre Verwendung.

Hohlfasern sind bereits bekannt und bezeichnen Filamentgarne oder Spinnfasern aus Viskose oder Synthesefasern mit Lufteinschlüssen, die durch spezielle Spinndüsen, z. B. bei Polyesterfasern, oder durch $CO_2$-Entwicklung beim Spinnvorgang, z. B. durch Zusatz von Natriumhydrogencarbonat-Zusatz zur Viskose-Spinnlösung, erzeugt werden. Hohlfasern sind gegenüber gewöhnlichen Fasern in der Regel fülliger und zeigen ein größeres Wärmeisolationsvermögen. Für industrielle Anwendungen werden auch Hohlfasern aus Celluloseacetat, Polysulfon, Polyacrylnitril, Polymethylmethacrylat, Polyamid, Polybenzimidazol oder Glas hergestellt.

Bevorzugte Anwendungsgebiete von Hohlfasern umfassen Füllungen für Bettdecken, Kissen, Schlafsäcke, Kälteschutzkleidung; ihren Einsatz in Kapillarmembranfiltern bei der Ultrafiltration und der Umkehrosmose zum Entsalzen, Konzentrieren, Fraktionieren von Proteinen, Enzymen und dergleichen sowie ihre Verwendung zur Luftzerlegung, zum Immobilisieren von Enzymen und Zellen und zur Hämodialyse.

Für die Herstellung von porösen Hohlfasern sind verschiedene Verfahren bekannt. Der herkömmliche Weg ist das Streckverfahren. So können viele kristalline Polymere durch Verstrecken in einen hoch-orientierten morphologischen Zustand überführt werden. Die resultierenden Fasern zeichnen sich insbesondere durch einen erhöhten Modul, eine verbesserte Festigkeit, eine deutlich erhöhte Verstreckbarkeit und ein hoch-elastisches Rückstellvermögen von großen Dehnungen aus.

Dieses Verhalten wird insbesondere durch die lamellaren Struktursegmente der Polymere senkrecht zur Faserrichtung erklärt. Beim Verstrecken der Polymere bilden sich Mikroporen, weil die Lamellen von einander entfernt werden, wobei die genaue Gestalt der Poren und die resultierende Verteilung der Poren durch viele verschiedene Parameter, wie z. B. das Verstreckverhältnis, die Spinntemperatur und die Tempertemperatur, beeinflusst werden.

Somit ist ein solches Verfahren zwar leicht durchzuführen, aber wegen der vielen zu beachtenden Einflussfaktoren lässt sich die genaue Gestalt der Poren sowie ihre Verteilung entlang der Faser nur schwer steuern und kontrollieren.

Ein anderes Verfahren zur Herstellung von porösen Hohlfasern ist die thermisch induzierte Phasenseparation (thermally induced phase separation; TIPS). Hierbei wird üblicherweise eine homogene Lösung bei einer erhöhten Temperatur gebildet, indem man das Polymer in einem Lösungsmittel mit einem hohen Siedepunkt und einem niedrigen Molekulargewicht löst. Die Lösung wird zu Hohlfasern versponnen und dann mit kontrollierter Geschwindigkeit abgekühlt oder abgeschreckt, um eine Phasenseparation herbeizuführen. Nach der Entfernung des Lösungsmittels, üblicherweise durch Lösungsmittelextraktion, werden mikroporöse Hohlfasern erhalten.

Die Struktur der Hohlfasern hängt in hohem Maße von den thermodynamischen Wechselwirkungen zwischen dem Polymer und dem Lösungsmittel, der Zusammensetzung der co-existierenden Phasen, der Temperatur, den Abkühlbedingungen sowie weiteren Faktoren ab, die die Kinetik des Phasenwachstums beeinflussen, sobald eine Phasentrennung stattgefunden hat.

Die mittels TIPS erhältlichen Fasern sind jedoch vergleichsweise brüchig sowie untereinander verklebt. Ihre Permeabilität ist im Vergleich mit porösen Hohlfasern, die durch Verstrecken erhalten werden, in der Regeln niedriger.

Schließlich wurde auch vorgeschlagen, Hohlfasern nach einem Spinnverfahren herzustellen, bei welchem man dem zu verspinnenden Polymer ein weiteres Polymer oder Mikropartikel zusetzt, das oder die in der Spinnzusammensetzung unlöslich sind. Nach dem Spinnprozess sollen das weitere Polymer oder die Mikropartikel mit einem selektiven Lösungsmittel herausgelöst werden.

Die Herstellung und die Eigenschaften von porösen Hohlfasern werden auch in der Patentliteratur sowie in sonstigen Veröffentlichungen beschrieben. Hierbei wird hauptsächlich Polypropylen als Ausgangsmaterial verwendet.

So betrifft das Patent US 5,232,642 einen Prozess für die Herstellung von porösen Hohlfasermembranen aus Polypropylen. Diese Hohlfasern haben große, rechteckige Poren mit Porendurchmessern von 1 $\mu$m bis 10 $\mu$m. Die Herstellung erfolgt durch Schmelzspinnen mit einer Hohlfaserdüse. Die Poren werden durch mehrfache Verstreckung bei verschiedenen Temperaturen mit zwischenzeitlicher Temperung bei verschiedenen Temperaturen erzeugt.

Das Patent US 6,890,436 beschreibt Hohlfasermembranen mit Öffnungen von 1 $\mu$m bis 10 $\mu$m. Diese Hohlfasermembranen werden in einem Nassspinnprozess hergestellt. Der Spinnlösung aus Polymer, Lösungsmittel und einem Additiv zur Phasenseparation im Spinnbad werden Mikropartikel zugesetzt, die im Lösungsmittel der Spinnlösung unlöslich sind. Nach dem Spinnprozess werden die Mikropartikel mit einem selektiven Lösungsmittel herausgelöst.

Als Beispiele für die Mikropartikel werden Metalloxide, wie Siliciumoxid, Zinkoxid und Aluminiumoxid, metallische Kleinstteilchen, wie Silicium, Zink, Kupfer, Eisen und Aluminium, und anorganische Verbindungen, wie Natriumchlorid, Natriumacetat, Natriumphosphat, Calciumcarbonat und Calciumhydroxid, insbesondere Kleinstteilchen aus Siliciumoxid, genannt. Die mittlere Teilchengröße der Mikropartikel soll vorzugsweise im Bereich von 1 $\mu$m bis 20 $\mu$m und bevorzugter im Bereich von 2 $\mu$m bis 10 $\mu$m liegen.

Die Patentanmeldung EP 0 168 783 A1 offenbart asymmetrische mikroporöse Hohlfasern für die Hämodialyse sowie Verfahren zu ihrer Herstellung. Die Hohlfaser besteht zu 90 Gew.-% bis 99 Gew.-% aus einem hydrophobem Polymer und zu 10 Gew.-% bis 1 Gew.-% aus einem hydrophilen Polymer mit einer Wasseraufnahmefähigkeit von 3 Gew.-% bis 10%, wobei die Hohlfaser dadurch hergestellt wird, dass eine extrudierte Lösung von 12 Gew.-% bis 20 Gew.-% ersten Polymer, 2 Gew.-% bis 10 Gew.-% zweiten Polymer Rest Lösungsmittel von innen nach außen unter gleichzeitigem Herauslösen eines Teils des Porenbildners aus dem Extrudat durchgefällt wird und anschließend der herausgelöste Teil des Porenbildners und die übrigen organischen Bestandteile ausgewaschen und danach die erhaltene Faser in einem Waschbad fixiert wird.

Das Patent US 5,435,955 beschreibt einen Prozess für die Herstellung von porösen Hohlfasern und Folien aus Polypropylen, bei welchem zahlreiche Mikroporen in den Hohlfasern oder Folien bei einem Streckprozess im Temperaturbereich von 110°C bis 155°C erzeugt werden. Die Streckrate beträgt weniger als 10 %/min.

In der Veröffentlichung S. Nago, Y. Mizutani Microporous Polypropylene Hollow Fibers Containing Calcium Carbonate Fillers J. Electron Microsc. 42 (1993) 407-411 werden schmelzgesponnene mikroporöse Hohlfasern aus Polypropylen beschrieben, die 60 Gew.-% Calciumcarbonat enthalten. Die Mikroporen werden durch einen Streckprozess der Hohlfasern erzeugt. Das Calciumcarbonat wird durch eine Mischung aus Salzsäure und Methanol entfernt. Die erreichte Porengröße ist abhängig von der Partikelgröße des Calciumcarbonates. Die berechneten Porengrößen liegen zwischen 200 nm und 2 $\mu$m.

In der Druckschrift K. Abrol, G. N. Qazi, A. K. Ghosh Characterization of an anionexchange porous polypropylene hollow fiber membrane for immobilization of ABL lipase Journal of Biotechnology 128 (2007) 838-848 wird eine kommerzielle Polypropylen-Hohlfaser mit einem Innendurchmesser von 240 $\mu$m und einem Außendurchmesser von 300 $\mu$m und einem mittleren Porendurchmesser von 100 $\mu$m und einer Porosität von 40 % durch eine strahlungsinduzierte Pfropfpolymerisation modifiziert. Glycidylmethacrylat wird mittels Gammastrahlung gepfropft. Durch diese Pfropfung sinkt der runde Porendurchmesser auf minimal 0,6 $\mu$m.

In dem Dokument L. Mei, D. Zhang, Q. Wang Morphology Structure Study of Polypropylene Hollow Fiber Membrane Made by the Blend-Spinning and Cold-Stretching Method Journal of Applied Polymer Science 84 (2002) 1390-1394 wird ein Blend von Polypropylen und einem leicht hydrolytisch abbaubarem Polyester beschrieben. Nach dem Schmelzspinnen mit einer Hohlfaserdüse wird die Hohlfaser bei 45°C verstreckt. Der Polyester wird entfernt. Es ergeben sich längliche Poren mit einer mittleren Länge von 30 $\mu$m und einer mittleren Breite von 5 $\mu$m.

Die Veröffentlichung M. Sakai, S. Matsunami The Structure and Characteristics of Polypropylene Hollow Fiber Membrane Plasma Separator Therapeutic Apheresis and Dialysis 7 (2003) 1, 69-72 beschreibt eine kommerzielle Hohlfasermembran aus Polypropylen. Diese Membran hat geordnete rechtwinklige Poren mit einer mittleren Porenbreite von 0,2 $\mu$m. Die maximale Porenbreite beträgt 0,6 $\mu$m.

In der Druckschrift S. Nago, Y. Mizutani Microporous Polypropylene Hollow Fibers with Double Layers Journal of Applied Polymer Science 56 (1995) 253-261 wird eine mikroporöse Hohlfaser mit einer Doppelschicht aus Polypropylen beschrieben. Diese porösen Hohlfasern werden durch einen Streckprozess von doppelschichtigen Hohlfasern hergestellt, die Polymethylsilsesquioxan (PMSO) Füllstoffe enthalten. Und zwar befinden sich relativ kleine Füllstoffpartikel in der inneren und relativ große Füllstoffpartikel in der äußeren Schicht. Es ergeben sich in der äußeren Schicht längliche Poren mit einer mittleren Länge von 10 $\mu$m und einer mittleren Breite von 2 $\mu$m. Die innere Schicht umfasst längliche Poren mit einer mittleren Länge von 5 $\mu$m und einer mittleren Breite von 1 $\mu$m.

In dem Artikel B. Gu, Q. Du, Y. Yang Microporous hollow fiber membranes formed from blends of isotactic and atactic polypropylene Journal of Membrane Science 164 (2000) 59-65 werden mikroporöse Hohlfasern beschrieben, die aus Blends von isotaktischen und ataktischen Polypropylen gesponnen werden. Das ataktische Polypropylen wird nach dem Schmelzspinnen durch Extraktion entfernt. Dann wird die Hohlfaser kalt gestreckt. Die Membranen haben kleinere Porendurchmesser und höhere Permeabilitäten als Hohlfasern, welche mit traditionellen Streckprozessen hergestellt werden. Der mittlere Porendurchmesser beträgt 0,017 $\mu$m.

Die Druckschrift S. Nago, Y. Mizutani Microporous Polypropylene Fibers Containing CaCO3 Filler Journal of Applied Polymer Science 62 (1996) 81-86 beschreibt einen analoges Verfahren zu der Veröffentlichung S. Nago, Y. Mizutani Microporous Polypropylene Hollow Fibers Containing Calcium Carbonate Fillers J. Electron Microsc. 42 (1993) 407-411. Der Unterschied zu dieser Veröffentlichung besteht lediglich darin, dass hier nur poröse Fasern hergestellt werden. Es entstehen längliche Poren mit einer mittleren Porenlänge von 15 $\mu$m und einer mittleren Porenbreite von 4 $\mu$m.

In der Veröffentlichung T. Schimanski, J. Loos, T. Peijs, B. Alcock, P. J. Lemstra On the Overdrawing of Melt-Spun Isotactic Polypropylene Tapes Journal of Applied Polymer Science 103 (2007) 2920-2931 wird die Herstellung von schmelzgesponnenen Folienbändchen aus Polypropylen beschrieben. Die Folienbändchen werden nach dem Schmelzspinnen in einem Heißluftofen mit einem Streckverhältnis von $\lambda$ größer 10 nachverstreckt (overdrawing). Bei diesen extremen Streckverhältnissen ändert sich die Morphologie der Foliebändchen. Die Farbe ändert sich von transparent zu opak. Nach Ätzen mit Permanganat sind an der Oberfläche längliche Poren mit einer mittleren Länge von 1 $\mu$m und einer Breite von 0,2 $\mu$m sichtbar.

Der Artikel J.-J. Kim, T.-S. Jang, Y.-D. Kwon, U. Y. Kim, S. S. Kim Structural study of microporous polypropylene hollow fiber membranes made by the melt-spinning and cold-stretching method Journal of Membrane Science 93 (1994) 209-215 beschreibt die Herstellung von mikroporösen Hohlfasern durch einen Schmelzspinnprozess mit anschließender Kaltverstreckung. Die gesponnenen Hohlfasern werden in einem dreifach wiederholten Zyklus bei 60°C bis 140°C für 30 min getempert und bei Raumtemperatur gestreckt, um die Mikroporen herzustellen. Die Streckverhältnisse betragen 30 %, 30 % und 50 %. Die mittleren Durchmesser der runden Poren betragen 100 $\mu$m.

In der Veröffentlichung C.-A. Lin, H.-C. Tsai, T.-C. An, C.-C. Tung Hollow Porous Polypropylene Fibers with Polyvinyl Alcohol by Melt Spinning http://dspace.lib.fcu.edu.tw/bitstream/2377/3879/1/ce05atc902007000008.pdf 15.08.2007 wird die Herstellung von mikroporösen Hohlfasern aus Polypropylen durch das Verspinnen eines Blends aus Polypropylen und dem wasserlöslichen Polyvinylalkohol beschrieben (Verhältnis 80:20). Durch eine Wasserbehandlung bei 70°C über 60 min wird der Polyvinylalkohol entfernt. Es ergeben sich längliche Poren mit einer mittleren Länge von 5 $\mu$m und einer Breite von 1 $\mu$m.

Schließlich sind aus der Patentanmeldung WO 2007/068593 gefällte Calciumcarbonat-Teilchen mit einer rhomboedrischen Morphologie bekannt, die u. a. als Füllstoff in Polymeren, Farben und Beschichtungen eingesetzt werden sollen. Textile Fasern, insbesondere Hohlfasern, werden in dieser Druckschrift jedoch nicht erwähnt.

In Anbetracht dieses Standes der Technik war es eine Aufgabe der vorliegenden Erfindung, Möglichkeiten zur besseren Herstellung von porösen Hohlfasern aufzuzeigen, die sich auf möglichst einfache Art und Weise, möglichst kostengünstig und möglichst effizient, großtechnisch umsetzen lassen. Dabei sollte das Eigenschaftsprofil der resultierenden Hohlfasern nach Möglichkeit weiter verbessert werden. Insbesondere wurde eine möglichst definierte und möglichst gut steuerbare Porenform sowie eine möglichst gleichmäßige Porenverteilung angestrebt.

Die Aufgabe der Erfindung bestand insbesondere darin, poröse Hohlfasern zugänglich zu machen, die sowohl eine durchgehende Porosität, bevorzugt eine Mikroporosität, zur Durchströmung mit Gasen oder Flüssigkeiten aufweisen als auch Poren, bevorzugt Nanoporen, mit geeigneten Porengeometrien zur Adsorption von Gasen oder flüssigen Substanzen umfassen.

Schließlich sollten auch besonders zweckmäßige Anwendungsgebiete der erfindungsgemäßen Hohlfasern aufgezeigt werden.

Gelöst werden diese sowie weitere Aufgaben, die sich aus den diskutierten Zusammenhängen unmittelbar ergeben, durch eine poröse Hohlfaser mit allen Merkmalen des vorliegenden Anspruchs 1. Weiterhin werden ein besonders vorteilhaftes Verfahren zur Herstellung der porösen Hohlfaser, besonders geeignete Zwischenprodukte sowie besonders zweckmäßige Anwendungsgebiete der porösen Hohlfaser unter Schutz gestellt.

Dadurch dass man eine poröse Hohlfaser bereitstellt, die erste Poren umfasst, die

■ eine mittlere Länge im Bereich von 0,045 $\mu$m bis 120 $\mu$m und
■ eine mittlere Breite im Bereich von 0,030 $\mu$m bis 20 $\mu$m, jeweils gemessen in Faserrichtung, aufweisen,

wobei das Verhältnis von mittlerer Länge der ersten Poren zur mittleren Breite der ersten Poren mindestens 1,5:1 ist, wobei die Hohlfaser weiterhin zweite Poren umfasst, die

■ eine mittlere Länge im Bereich von 0,1 nm bis 99 nm und
■ eine mittlere Breite im Bereich von 1 nm bis 20000 nm, jeweils gemessen in Faserrichtung, aufweisen,

wobei das Verhältnis von mittlerer Länge der zweiten Poren zur mittleren Breite der zweiten Poren höchstens 1:1,5 ist, gelingt es auf nicht ohne weiteres vorhersehbare Weise eine poröse Hohlfaser mit einem verbessertem Eigenschaftsprofil zugänglich zu machen, die sich insbesondere durch eine besser definierte Form der Poren sowie eine regelmäßigere Verteilung der Poren auszeichnet. Die erfindungsgemäße poröse Hohlfaser weist einerseits eine durchgehende Porosität, insbesondere eine Mikroporosität, zur Durchströmung mit Gasen oder Flüssigkeiten auf. Andererseits umfasst sie auch Poren, insbesondere Nanoporen, mit geeigneten Porengeometrien zur Adsorption von Gasen oder flüssigen Substanzen.

Darüber hinaus lässt sich die erfindungsgemäße Lösung auf vergleichbar einfache Art und Weise, äußerst kostengünstig und effizient, großtechnisch umsetzen.

Schließlich kann die erfindungsgemäße poröse Hohlfaser aufgrund ihres hervorragenden Eigenschaftsprofils in vielen Anwendungsgebieten auf besonders vorteilhafte Weise genutzt werden.

Gemäß einem ersten Aspekt betrifft die vorliegende Erfindung eine erste Hohlfaser, die zur Herstellung der erfindungsgemäßen porösen Hohlfaser besonders geeignet ist.

Der Begriff "Faser" bezeichnet in diesem Zusammenhang den bei der Herstellung primär entstandenen dünnen Strang, der ein großes Verhältnis von Länge zu Querschnitt aufweist. Unter dem Begriff "Faden" wird demgegenüber ein Bündel von Einzelfasern verstanden. Für weitere Details zu diesen Fachbegriffen der Textilindustrie wird auf die gängige Fachliteratur, insbesondere auf Hans-Georg Elias Makromoleküle Weinheim, Wiley-VCH, 6. Auflage, 2003, Band 4 Anwendungen von Polymeren, Kapitel 6 Fasern, Fäden und Gewebe, Seite 154 bis 243 und Franz Fourné Synthetische Fasern - Herstellung, Maschinen und Apparate, Eigenschaften; Handbuch für Anlagenplanung, Maschinenkonstruktion und Betrieb München, Wien; Hanser 1995 sowie die dort genannten Fundstellen verwiesen.

Im Rahmen der vorliegenden Erfindung umfasst die erste Hohlfaser mindestens ein Polymer, vorzugsweise mindestens ein thermoplastisch verarbeitbares Polymer, welches weiterhin vorzugsweise teilkristallin ist. Für die Zwecke der vorliegenden Erfindung besonders geeignete Polymere schließen Cellulosepolymere, insbesondere Celluloseacetate, Polyacrylate, Poly(aryl-ether-ether-ketone), Polymethacrylate, insbesondere Polymethylmethacrylate, Polyacrylnitrile, Polyimide, insbesondere Polybenzimidazole, Polyamide, Polyester, Polysulfone, Polyolefine, insbesondere Polypropylene, Polymilchsäure, Polybuttersäure, und Mischungen davon ein.

Im Rahmen einer ganz besonders bevorzugten Ausführungsform der vorliegenden Erfindung umfasst die erste Hohlfaser mindestens ein Polyolefin, insbesondere mindestens ein Polypropylen, zweckmäßigerweise mindestens ein isotaktisches Polypropylen oder mindestens ein syndiotaktisches Polypropylen.

Das erfindungsgemäß verwendete Polymer, vorzugsweise das thermoplastisch verarbeitbare Polymer, insbesondere das Polypropylen, hat vorzugsweise einen Schmelzindex (MI) von 0,5 bis 30, gemessen entsprechend der Vorgehensweise, die in ASTM D-1238 beschrieben wird. Besonders bevorzugt liegt der Schmelzindex innerhalb des Bereiches von 1 bis 15.

Im Rahmen der vorliegenden Erfindung umfasst die erste Hohlfaser weiterhin Calciumcarbonat-Teilchen, vorzugsweise gefällte Calciumcarbonat-Teilchen (Precipitated Calcium Carbonate; PCC), mit bestimmten Eigenschaften.

In diesem Zusammenhang umfasst der Begriff "Teilchen" Kristallite oder Primärpartikel sowie Cluster von Primärpartikeln. Kristallite oder Primärpartikel werden als die kleinsten Einzelteilchen definiert, die in Elektronenmikroskopaufnahmen zu erkennen sind.

Der Begriff "Calciumcarbonat-Teilchen" bezeichnet im Rahmen der vorliegenden Erfindung Teilchen, die, bezogen auf ihr Gesamtgewicht, mindestens 95,0 Gew.-%, bevorzugt mindestens 99,0 Gew.-%, insbesondere mindestens 99,5 Gew.-% $CaCO_3$ enthalten.

Die Calciumcarbonat-Teilchen der vorliegenden Erfindung sind vorzugsweise im Wesentlichen kristallin. Günstigerweise liegen mindestens 50 Gew.-%, bevorzugt mindestens 75 Gew.-%, insbesondere mindestens 90 Gew.-% der Calciumcarbonat-Teilchen als kristallines Material vor. Besonders bevorzugt umfassen die Calciumcarbonat-Teilchen Calcit- und/oder Aragonit-Anteile, wobei der Calcit-Anteil zweckmäßigerweise größer 30 Gew.-%, vorzugsweise größer 50 Gew.-%, insbesondere größer 90 Gew.-% ist. Erfindungsgemäß wird der Kristallinitätsgrad der Calciumcarbonat-Teilchen und die Art der kristallinen Phasen vorzugsweise mittels Röntgenbeugung ermittelt.

Die Kristallite der Calciumcarbonat-Teilchen weisen im Rahmen der vorliegenden Erfindung einen Formfaktor kleiner 5, vorzugsweise kleiner 4, bevorzugt kleiner 3, besonders bevorzugt kleiner 2, insbesondere kleiner 1,7, auf. Weiterhin ist der Formfaktor der Kristallite vorzugsweise größer 1, bevorzugt größer 1,1, insbesondere größer 1,3. Der Formfaktor (engl. aspect ratio) wird durch das Verhältnis von größter Abmessung und kleinster Abmessung der Kristallite (Primärpartikel) definiert. Er wird vorzugsweise mittels Rasterelektronenmikroskopie ermittelt, zweckmäßigerweise indem man die größte Abmessung und die kleinste Abmessung der Kristallite für mindestens 10 Kristallite in einer Aufnahme ermittelt und jeweils arithmetisch mittelt.

Erfindungsgemäß haben die Calciumcarbonat-Teilchen vorzugsweise im Wesentlichen eine rhomboedrische Kristallmorphologie. Günstigerweise besitzen mindestens 50 %, bevorzugt mindestens 75 %, besonders bevorzugt mindestens 90 %, zweckmäßigerweise mindestens 95 %, insbesondere mindestens 99 % der Kristallite eine rhomboedrische Form. In diesem Zusammenhang wird die Form der Kristallite vorzugsweise mittels Rasterelektronenmikroskopie ermittelt.

Für die Zwecke der vorliegenden Erfindung besonders geeignete Calciumcarbonat-Teilchen weisen darüber hinaus eine spezifische Oberfläche BET von mindestens 0,1 $m^2$/g, bevorzugt von mindestens 1,0 $m^2$/g, besonders bevorzugt von mindestens 3,0 $m^2$/g, günstigerweise von mindestens 4,0 $m^2$/g, besonders bevorzugt von mindestens 5,0 $m^2$/g, insbesondere von mindestens 10,0 $m^2$/g, auf. Weiterhin ist die spezifische Oberfläche BET der Calciumcarbonat-Teilchen vorzugsweise kleiner 30,0 $m^2$/g, bevorzugt kleiner 25,0 $m^2$/g, besonders bevorzugt kleiner 20,0 $m^2$/g, günstigerweise kleiner 15,0 $m^2$/g. Im Rahmen der vorliegenden Erfindung wird die spezifische Oberfläche BET der Calciumcarbonat-Teilchen zweckmäßigerweise gemäß ISO 9277-1995 ermittelt.

Die Calciumcarbonat-Teilchen haben im Rahmen der vorliegenden Erfindung vorzugsweise eine mittlere Primärpartikelgröße von mindestens 10 nm, bevorzugt von mindestens 30 nm, besonders bevorzugt von mindestens 50 nm, zweckmäßigerweise von mindestens 70 nm, ganz besonders bevorzugt von mindestens 100 nm, günstigerweise von mindestens 150 nm, insbesondere von mindestens 200 nm. Weiterhin ist die mittlere Primärpartikelgröße vorzugsweise höchstens 20 $\mu$m, bevorzugt höchstens 10 $\mu$m, besonders bevorzugt höchstens 1 $\mu$m, ganz besonders bevorzugt höchstens 0,75 $\mu$m, günstigerweise höchstens 0,6 $\mu$m, insbesondere höchstens 0,5 $\mu$m. Die Primärpartikelgröße wird vorzugsweise mittels Rastertunnelmikroskopie (REM) ermittelt.

Die Teilchengröße und die Teilchengrößenverteilung der Calciumcarbonat-Teilchen wird vorzugsweise mittels Sedimentationsanalyse, zweckmäßigerweise unter Verwendung des Sedigraphs 5100 (Micromeritics GmbH), ermittelt.

Die mittlere Größe der Calciumcarbonat-Teilchen (entspricht dem im Folgenden definierten $d_{50\%}$-Wert) ist mindestens 0,030 $\mu$m, bevorzugt mindestens 0,050 $\mu$m, besonders bevorzugt mindestens 0,070 $\mu$m, zweckmäßigerweise mindestens 0,100 $\mu$m, ganz besonders bevorzugt mindestens 0,150 $\mu$m, günstigerweise mindestens 0,250 $\mu$m,

insbesondere mindestens 0,350 μm. Weiterhin ist die mittlere Größe der Calciumcarbonat-Teilchen höchstens 20 μm, bevorzugt höchstens 10 μm, besonders bevorzugt höchstens 5 μm, zweckmäßigerweise höchstens 3 μm, ganz besonders bevorzugt höchstens 2 μm, günstigerweise höchstens 1,2 μm, insbesondere höchstens 0,8 μm. Der Wert $d_{50\%}$ ist der Teilchengrößenwert, bei welchem 50 Gew.% der Teilchen eine Teilchengröße kleiner oder gleich dem $d_{50\%}$-Wert aufweisen.

Die Breite der Teilchengrößenverteilung wird vorzugsweise durch den granulometrischen Faktor der Teilchengrößenverteilung angegeben. Der granulometrische Faktor wird durch die folgende Gleichung gegeben:

$$\text{granulometrischer Faktor} = (d_{84\%} - d_{16\%}) / d_{50\%},$$

wobei

$d_{84\%}$ den Teilchengrößenwert bezeichnet, bei welchem 84 Gew.-% der Teilchen eine Teilchengröße kleiner oder gleich dem $d_{84\%}$-Wert aufweisen, und
$d_{16\%}$ den Teilchengrößenwert bezeichnet, bei welchem 16 Gew.-% der Teilchen eine Teilchengröße kleiner oder gleich dem $d_{16\%}$-Wert aufweisen.

Der granulometrische Faktor der Teilchengrößenverteilung der Calciumcarbonat-Teilchen ist vorzugsweise höchstens 3,5, bevorzugt höchstens 2,5, insbesondere höchstens 1. Weiterhin ist der granulometrische Faktor der Teilchengrößenverteilung der Calciumcarbonat-Teilchen vorzugsweise mindestens 0,05.

Im Rahmen einer besonders bevorzugten Ausführungsform der vorliegenden Erfindung sind die Calciumcarbonat-Teilchen mit mindestens einem Beschichtungsmittel beschichtet. Für diese Zwecke bevorzugte Beschichtungsmittel umfassen Silane, Carbonsäuren, Carbonsäuresalze, Polyacrylsäuren, Polyacrylsäuresalze und Mischungen davon. Dabei umfassen die genannten Salze vorzugsweise keine Natriumsalze.

Die Carbonsäuren können aliphatisch oder aromatisch sein, wobei aliphatische Carbonsäuren besonders bevorzugt werden.

Bei den aliphatischen Carbonsäuren kann es sich um lineare, verzweigte oder cyclische, substituierte oder unsubstituierte, gesättigte oder ungesättigte, aliphatische Carbonsäuren handeln. Sie umfassen vorzugsweise mindestens 4, bevorzugt mindestens 8, besonders bevorzugt mindestens 10, insbesondere mindestens 14 Kohlenstoffatome. Weiterhin umfassen sie vorzugsweise höchstens 32, bevorzugt höchstens 28, besonders bevorzugt höchstens 24, insbesondere höchstens 22 Kohlenstoffatome.

Für die Zwecke der vorliegenden Erfindung ganz besonders bevorzugte aliphatische Carbonsäuren umfassen die Capronsäure, die Caprylsäure, die Caprinsäure, die Laurinsäure, die Myristinsäure, die Palmitinsäure, die Stearinsäure, die Isostearinsäure, die Hydroxystearinsäure, die Arachinsäure, die Behensäure, die Lignorcerinsäure, die Hexacosansäure, die Montansäure, die Triacontansäure, die 9-Tetradecensäure, die Palmitoleinsäure, die cis-6-Octadecensäure, die (Z)-Octadec-9-ensäure, die Ölsäure, die Elaidinsäure, die Linolsäure, die trans-9,trans-12-Octadecadiensäure, die Linolensäure, die trans-9,trans-12-Octadecadiensäure, die α-Elaeostearinsäure, die β-Elaeostearinsäure, die Gadoleinsäure, die Arachidonsäure, die Erucasäure, die trans-13-Docosensäure und die all-cis-7,10,13,16,19-Docosapentaensäure. Weiterhin sind Mischungen und/oder Salze dieser Carbonsäuren besonders vorteilhaft. Mischungen, die im Wesentlichen Palmitinsäure, Stearinsäure und Ölsäure umfassen, werden ganz besonders bevorzugt. Mischungen mit der Bezeichnung "Stearine", die 30 Gew.-% bis 40 Gew.-% Stearinsäure, 40 Gew.-% bis 50 Gew.-% Palmitinsäure und 13 Gew.-% bis 20 Gew.-% Ölsäure umfassen, sind für die Zwecke der vorliegenden Erfindung ganz besonders geeignet.

Weitere bevorzugte aliphatische Carbonsäuren schließen Harzsäuren, insbesondere Lävopimarsäure, Neoabietinsäure, Palustrinsäure, Abietinsäure und Dehydroabietinsäure, ein. Darüber hinaus sind Mischungen und/oder Salze dieser Carbonsäuren besonders vorteilhaft.

Bevorzugte Salze der Carbonsäuren, insbesondere der aliphatischen Carbonsäuren, umfassen Kalium-, Ammonium- und Calciumsalze, besonders bevorzugt Calciumsalze, der Carbonsäuren.

Für die Zwecke der vorliegenden Erfindung bevorzugte Polyacrylsäuren weisen ein Gewichtsmittel des Molekulargewichts von mindestens 500 g/mol, bevorzugt von mindestens 700 g/mol, insbesondere von mindestens 1000 g/mol, auf. Weiterhin ist das Molekulargewicht vorzugsweise höchstens 15000 g/mol, bevorzugt höchstens 4000 g/mol, insbesondere höchstens 2000 g/mol. Weiterhin sind Mischungen und/oder Salze dieser Polyacrylsäuren besonders vorteilhaft.

Bevorzugte Salze der Polyacrylsäuren umfassen Kalium-, Ammonium- und Calciumsalze, besonders bevorzugt Calciumsalze, der Polyacrylsäuren.

Der Anteil des Beschichtungsmittels kann prinzipiell frei gewählt werden. Er ist vorzugsweise mindestens 0,0001 Gew.-%, bevorzugt mindestens 0,001 Gew.-%, besonders bevorzugt mindestens 0,01 Gew.-%, insbesondere mindestens 0,05 Gew.-%, jeweils bezogen auf das Gesamtgewicht der beschichteten Calciumcarbonat-Teilchen. Weiterhin ist er vorzugsweise höchstens 60 Gew.-%, bevorzugt höchstens 25 Gew.-%, besonders bevorzugt höchstens 10 Gew.-%, insbesondere höchstens 6 Gew.-%, jeweils bezogen auf das Gesamtgewicht der beschichteten Calciumcarbonat-Teilchen.

Die Herstellung der erfindungsgemäß einzusetzenden, ggf. beschichteten Calciumcarbonat-Teilchen kann auf an sich bekannte Weise erfolgen. Sie wird insbesondere in der Patentanmeldung WO 2007/068593 ausführlich beschrieben, deren diesbezügliche Offenbarung durch Bezugsnahme in die vorliegende Anmeldung mit aufgenommen wird.

Die relativen Anteile der Komponenten an der ersten Hohlfaser unterliegen keinen besonderen Beschränkungen und können frei gewählt werden. Für die Zwecke der vorliegenden Erfindung ist es jedoch besonders günstig, wenn das Gewichtsverhältnis von Polymer zu Calciumcarbonat im Bereich von 95:5 bis 50:50, bevorzugt im Bereich von 90:10 bis 60:40, insbesondere im Bereich von 80:20 bis 70:30, liegt.

Weiterhin umfasst die erste Hohlfaser vorzugsweise mindestens 25,0 Gew.-%, bevorzugt mindestens 50,0 Gew.-%, insbesondere mindestens 60,0 Gew.-%, Polymer und vorzugsweise mindestens 1,0 Gew.-%, bevorzugt mindestens 5,0 Gew.-%, besonders bevorzugt mindestens 10,0 Gew.-%, insbesondere mindestens 20,0 Gew.-%, Calciumcarbonat, jeweils bezogen auf das Gesamtgewicht der Hohlfaser, wobei sich die Anteile des Polymers und des Calciumcarbonats vorzugsweise zu mindestens 75,0 Gew.-%, bevorzugt zu mindestens 90,0 Gew.-%, insbesondere zu mindestens 95,0 Gew.-%, addieren. Darüber hinaus umfasst die erste Hohlfaser vorzugsweise höchstens 50,0 Gew.-%, bevorzugt höchstens 40,0 Gew.-%, insbesondere höchstens 35,0 Gew.-% Calciumcarbonat-Teilchen, jeweils bezogen auf das Gesamtgewicht der Hohlfaser.

Die Herstellung der ersten Hohlfaser kann auf an sich bekannte Weise erfolgen. Zweckmäßigerweise geht man von einer Zusammensetzung aus, die das Polymer und das Calciumcarbonat umfasst. Besonders vorteilhaft ist die Zumischung eines organischen Nukleierungsmittels, da hierdurch die Calciumcarbonat-Kristallite im Polymer deutlich verkleinert werden und die Rissausbreitung wesentlich homogener wird. Für die Zwecke der vorliegenden Erfindung besonders geeignete Nukleierungsmittel umfassen mehrwertige Alkohole, die vorzugsweise mindestens 2, bevorzugt mindestens 3, besonders bevorzugt mindestens 4, günstigerweise mindestens 5, insbesondere mindestens 6 Hydroxylgruppen umfassen, die vorzugsweise jeweils als CHOH-Gruppen vorliegen. Ganz besonders geeignete Nukleierungsmittel schließen Ethylenglykol, Glycerin, Threit, Erythrit, Arabit, Ribit, Adonit, Xylit, Sorbit, Mannit, Dulcit ein, wobei Verbindungen mit mehr als 4, bevorzugt mit 6, Kohlenstoffatomen besonders bevorzugt werden.

Der Anteil des Nukleierungsmittels in der Zusammensetzung ist vorzugsweise höchstens 5 Gew.-%, bevorzugt im Bereich von 0,1 Gew.-% bis höchstens 3 Gew.-%, besonders bevorzugt im Bereich von 0,2 Gew.-% bis höchstens 1,5 Gew.-%, insbesondere im Bereich von 0,3 Gew.-% bis 0,75 Gew.-%, jeweils bezogen auf das Gesamtgewicht der Zusammensetzung, wobei der Anteil von Polymer, Calciumcarbonat und Nukleierungsmittel an der Zusammensetzung, bezogen auf ihr Gewicht, vorzugsweise mindestens 85,0 Gew.-%, bevorzugt, mindestens 90,0 Gew.-%, besonders bevorzugt mindestens 95,0 Gew.-%, insbesondere mindestens 99,0 Gew.-%, beträgt.

Vorzugsweise schmelzspinnt man die Zusammensetzung, die das Polymer und die Calciumcarbonat-Teilchen umfasst, unter Verwendung einer Düse zur Bildung von Hohlfasern. Man erhält auf diese Weise eine nicht-gestreckte Hohlfaser, die vorzugsweise orientiert und hochkristallisiert ist. Für weitere Details bzgl. Düsen zur Bildung von Hohlfasern wird auf die gängige Fachliteratur, insbesondere auf Franz Fourné Synthetische Fasern: Herstellung, Maschinen und Apparate, Eigenschaften; Handbuch für Anlagenplanung, Maschinenkonstruktion und Betrieb München, Wien; Hanser Verlag, 1995 und die dort genannten Fundstellen, verwiesen.

Obwohl eine Düse mit einer Doppelröhrenkonstruktion bevorzugt ist, da sie einen im Wesentlichen gleichmäßigen Abschnitt ergeben kann, kann eine Düse mit Hufeisenform oder einem anderen Aufbau ebenfalls verwendet werden. Wenn eine Düse mit Doppelröhrenaufbau verwendet wird, kann die Luft, die in die Hohlfaser eingefügt wird, um dessen Hohlform aufrecht zu erhalten, spontan oder zwangsweise zugeführt werden.

Um die erste Hohlfaser dieser Erfindung stabil zu erhalten, ist es wünschenswert, dass die Spinntemperatur 20°C bis 150°C höher als der Schmelzpunkt des Polymers ist.

Das bei einer geeigneten Spinntemperatur extrudierte Polymer wird vorzugsweise bei einem Spinnverzug von 5 bis 5000 aufgenommen.

Die resultierende, erste Hohlfaser ist in der Längsrichtung der Faser vorzugsweise hochorientiert und hat vorzugsweise einen Innendurchmesser von 100 $\mu$m bis 2000 $\mu$m und eine Wanddicke von 15 $\mu$m bis 800 $\mu$m.

Sie ist für die Herstellung der erfindungsgemäßen porösen Hohlfaser besonders geeignet. Diese wiederum umfasst erste Poren, die

■ eine mittlere Länge im Bereich von 0,045 $\mu$m bis 120 $\mu$m, vorzugsweise im Bereich von 0,105 $\mu$m bis 60 $\mu$m, bevorzugt im Bereich von 0,150 $\mu$m bis 30 $\mu$m, besonders bevorzugt im Bereich von 0,225 $\mu$m bis 18 $\mu$m, zweck-

mäßigerweise im Bereich von 0,375 µm bis 12 µm, ganz besonders bevorzugt im Bereich von 0,525 µm bis 7,2 µm, insbesondere im Bereich von 0,600 µm bis 6,4 µm, und

■ eine mittlere Breite im Bereich von 0,030 µm bis 20 µm, vorzugsweise im Bereich von 0,050 µm bis 10 µm, bevorzugt im Bereich von 0,070 µm bis 5 µm, besonders bevorzugt im Bereich von 0,100 µm bis 3 µm, zweckmäßigerweise im Bereich von 0,150 µm bis 2 µm, ganz besonders bevorzugt im Bereich von 0,250 µm bis 1,2 µm, insbesondere im Bereich von 0,350 µm bis 0,8 µm, jeweils gemessen in Faserrichtung, aufweisen,

wobei das Verhältnis von mittlerer Länge der ersten Poren zur mittleren Breite der ersten Poren mindestens 1,5:1, vorzugsweise mindestens 2:1, bevorzugt mindestens 3:1, besonders bevorzugt mindestens 5:1, zweckmäßigerweise mindestens 7,5:1, insbesondere mindestens 10:1, ist.

Weiterhin umfasst die poröse Hohlfaser zweite Poren, die

■ eine mittlere Länge im Bereich von 0,1 nm bis 99 nm, vorzugsweise im Bereich von 0,2 nm bis 90 nm, bevorzugt im Bereich von 0,3 nm bis 80 nm, besonders bevorzugt im Bereich von 0,4 nm bis 70 nm, zweckmäßigerweise im Bereich von 0,5 nm bis 60 nm, insbesondere im Bereich von 0,75 nm bis 50 nm, und
■ eine mittlere Breite im Bereich von 1 nm bis 20000 nm, vorzugsweise im Bereich von 5 nm bis 15000 nm, bevorzugt im Bereich von 10 nm bis 10000 nm, besonders bevorzugt im Bereich von 20 nm bis 5000 nm, zweckmäßigerweise im Bereich von 30 nm bis 2000 nm, insbesondere im

Bereich von 50 nm bis 1000 nm, jeweils gemessen in Faserrichtung, aufweisen, wobei das Verhältnis von mittlerer Länge der zweiten Poren zur mittleren Breite der zweiten Poren höchstens 1:1,5, vorzugsweise höchstens 1:2, bevorzugt höchstens 1:3, besonders bevorzugt höchstens 1:5, zweckmäßigerweise höchstens 1:7,5, insbesondere höchstens 1:10, ist,

Die entsprechenden Werte für die mittlere Länge und Breite der jeweiligen Poren werden vorzugsweise mittels Elektronenmikroskopie ermittelt, wobei in einer Aufnahme vorzugsweise ein arithmetisches Mittel über mindestens 5, bevorzugt mindestens 10, insbesondere mindestens 15, Poren gebildet wird.

Zur Herstellung der porösen Hohlfaser der Erfindung wird die erste Hohlfaser vorzugsweise auf eine Dehnung größer 50 %, bevorzugt größer 100 %, besonders bevorzugt größer 200 %, insbesondere im Bereich von 300 % bis 600 %, verstreckt, jeweils bezogen auf die Ausgangslänge der Hohlfaser, gemessen bei 25°C.

Zuvor wird diese erste Hohlfaser günstigerweise bei einer Temperatur im Bereich von 100°C bis 165°C, vorzugsweise im Bereich von 110°C bis 155°C vor dem Strecken wärmebehandelt. Die Wärmebehandlungs-(oder Vergütungs)-zeit liegt vorzugsweise bei 30 min oder mehr.

Die Verstreckung der Hohlfaser selber wird vorzugsweise bei einer Temperatur im Bereich von 100°C bis 165°C, vorzugsweise im Bereich von 110°C bis 155°C, durchgeführt.

Die Deformationsrate während des Verstreckens wird vorzugsweise auf nicht mehr als 10 % pro Sekunde eingestellt. Weiterhin liegt die Streckgeschwindigkeit zweckmäßigerweise im Bereich von 10 cm/min bis 110 cm/min.

Der Ausdruck "Deformationsrate", wie er hierin verwendet wird, bedeutet einen Wert, der durch Dividieren der Streckmenge (in %) in einem Streckbereich durch die Zeit (in Sekunden), die erforderlich ist, damit die Hohlfaser den Streckbereich passiert, erhalten wird.

Im Rahmen einer besonders bevorzugten Variante der vorliegenden Erfindung werden die Calciumcarbonat-Teilchen nach dem Verstrecken aus der porösen Hohlfaser zumindest teilweise entfernt. Zu diesem Zweck wird vorzugsweise ein geeignetes Lösungsmittel eingesetzt, bevorzugt eine wässrige Zusammensetzung, besonders bevorzugt eine saure wässrige Zusammensetzung, die vorzugsweise weiterhin noch mindestens einen Alkohol, insbesondere Methanol, Ethanol oder Propanol, umfasst. Zweckmäßigerweise ist der Rest-Calciumcarbonat-Gehalt der porösen Hohlfaden nach der zumindest teilweisen Entfernung der Calciumcarbonat-Teilchen kleiner 30 Gew.-%, bevorzugt kleiner 20 Gew.-%, besonders bevorzugt kleiner 10 Gew.-%, günstigerweise kleiner 5 Gew.-%, ganz besonders bevorzugt kleiner 1 Gew.-%, insbesondere kleiner 0,1 Gew.-%, jeweils bezogen auf das Gesamtgewicht der porösen Hohlfaser.

Die resultierenden porösen Hohlfasern haben eine im Wesentlichen stabilisierte Form und erfordern nicht notwendigerweise einen thermischen Fixierschritt zum Fixieren der porösen Struktur. Falls gewünscht, können sie jedoch thermisch unter konstanter Länge unter Zugbeanspruchung oder unter entspannten Bedingungen in dem gleichen Temperaturbereich, wie er für das Verstrecken angewandt wird, thermisch fixiert werden.

Bevorzugte Anwendungsgebiete der erfindungsgemäßen porösen Hohlfaser umfassen ihren Einsatz in Füllungen für Bettdecken, Kissen, Schlafsäcke, Kälteschutzkleidung, in selektiv permeablen Membranen, insbesondere in Kapillarmembranfiltern, bei der Ultrafiltration, Mikrofiltration und der Umkehrosmose, zum Entsalzen, Konzentrieren, Fraktionieren von Proteinen, Enzymen und dergleichen, zum Zerlegen von Gasgemischen, als Oxygenator in der künstlichen Lunge, zur Plasmaseparation bei der Dialyse, bei der katalytischen Umwandlung sowie bei der Rückgewinnung von Katalysatoren. Sie ist weiterhin für die Immobilisierung von Enzymen und/oder Zellen und zur Hämodialyse besonders geeignet. Darüber hinaus ist ihre Anwendung zur Speicherung von Wasserstoff, wie zum Beispiel für Brennstoffzellen, besonders vorteilhaft. Die Verwendung der erfindungsgemäßen porösen Hohlfaser bei der Mikrofiltration wird in diesem Zusammenhang ganz besonders bevorzugt.

Im Folgenden wird die Erfindung durch ein Beispiel weiter veranschaulicht, ohne dass hierdurch eine Beschränkung des Erfindungsgedankens erfolgen soll.

Beispiel 1

Mit einem rhomboedrischen, gefällten Calciumcarbonat (Calcit-Teilchen; Formfaktor: 1:5; Kantenlänge ungefähr 350 nm; Teilchengrößenverteilung (Sedimentationsanalyse unter Verwendung des Sedigraphs 5100): $d_{84\%}$ = 800 nm; $d_{50\%}$ = 570 nm; $d_{16\%}$ = 400 nm; BET: 7,0 $m^2/g$) wurde nach folgender Rezeptur ein Blend hergestellt:

Rezeptur

30 g isotaktisches Polypropylen
10 g gefälltes Calciumcarbonat
0,14 g organisches Nukleierungsmittel (Sorbitolderivat)

Die Proben wurden in zehn Chargen in einem Mikrocompounder bei 210°C mit einer Drehzahl von 80 Umdrehungen pro Minute über eine Zeitdauer von vier Minuten nach dem Aufschmelzen gemischt.

Die fertige Mischung wurde in einer Kolbenspinneinrichtung mit Hohldüse bei 240°C mit einer Abzugsgeschwindigkeit von 100 m/min versponnen.

Die ersponnene Hohlfaser wurde bei einer Temperatur von 130°C mit einer Geschwindigkeit von 50 cm/min (ursprüngliche Faserlänge: 5 cm) auf eine Dehnung von 400 % verstreckt.

Die so hergestellte Hohlfaser zeigt über das gesamte Volumen längliche Mikroporen in Streckrichtung mit einer mittleren Porenlänge von 10 $\mu$m und einer mittleren Porenbreite von 1 $\mu$m. Die Mikroporen zeigen eine durchgängige Struktur. Weiterhin zeigen die so hergestellten Hohlfasern Nanoporen mit einer mittleren Porenbreite von 100 nm und einer mittleren Porenlänge von 10 nm, jeweils in Streckrichtung betrachtet.

Die Calciumcarbonat-Teilchen wurden mit einer Mischung (50:50) von Methanol und Salzsäure aus den Hohlfasern entfernt.

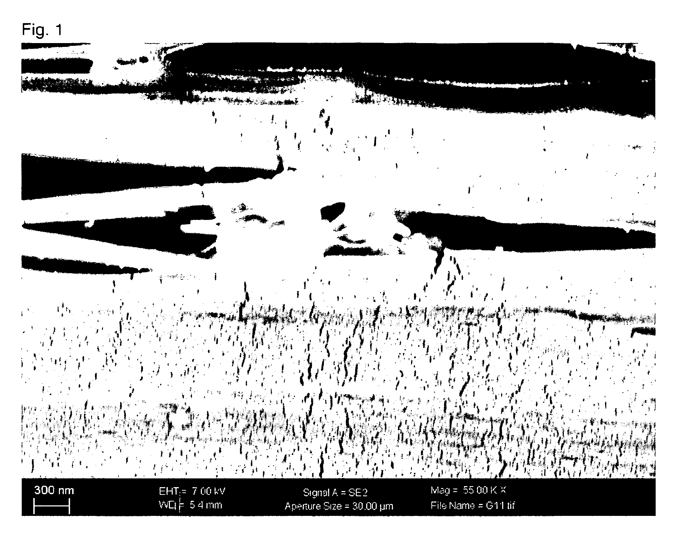

Fig. 1 zeigt eine Rastertunnelmikroskopaufnahme einer verstreckten Hohlfaser, die erste Poren in Fadenrichtung, zweite Poren senkrecht zur Fadenrichtung sowie Calciumcarbonat-Teilchen enthält.

**Patentansprüche**

1. Poröse Hohlfaser, umfassend erste Poren, die

   ■ eine mittlere Länge im Bereich von 0,045 $\mu$m bis 120 $\mu$m und
   ■ eine mittlere Breite im Bereich von 0,030 $\mu$m bis 20 $\mu$m, jeweils gemessen in Faserrichtung, aufweisen,

   wobei das Verhältnis von mittlerer Länge der ersten Poren zur mittleren Breite der ersten Poren mindestens 1,5:1 ist, **dadurch gekennzeichnet, dass**
   die Hohlfaser weiterhin zweite Poren umfasst, die

   ■ eine mittlere Länge im Bereich von 0,1 nm bis 99 nm und
   ■ eine mittlere Breite im Bereich von 1 nm bis 20000 nm, jeweils gemessen in Faserrichtung, aufweisen,

   wobei das Verhältnis von mittlerer Länge der zweiten Poren zur mittleren Breite der zweiten Poren höchstens 1:1,5 ist.

2. Hohlfaser, umfassend mindestens ein Polymer sowie Calciumcarbonat-Teilchen, **dadurch gekennzeichnet, dass** die Calciumcarbonat-Teilchen eine mittlere Teilchengröße $d_{50\%}$ im Bereich von 30 nm bis 20 $\mu$m aufweisen und die Kristallite der Calciumcarbonat-Teilchen einen Formfaktor kleiner 5 aufweisen.

3. Hohlfaser nach Anspruch 1 oder 2, **dadurch gekennzeichnet, dass** sie

   o einen innenliegenden Hohlraum mit einem Innendurchmesser im Bereich von 100 $\mu$m bis 2000 $\mu$m und

o einen Mantel umfasst, der eine Wanddicke im Bereich von 15 µm bis 800 µm aufweist.

4. Hohlfaser nach Anspruch 2 oder 3, **dadurch gekennzeichnet, dass** die Calciumcarbonat-Teilchen eine mittlere Teilchengröße $d_{50\%}$ im Bereich von 150 nm bis 2 µm aufweisen.

5. Hohlfaser nach mindestens einem der Ansprüche 2 bis 4, **dadurch gekennzeichnet, dass** die Calciumcarbonat-Teilchen einen Formfaktor im Bereich von 1,1 bis 4,0 aufweisen.

6. Hohlfaser nach mindestens einem der Ansprüche 2 bis 5, **dadurch gekennzeichnet, dass** sie ein rhomboedrisches, gefälltes Calciumcarbonat umfasst.

7. Hohlfaser nach mindestens einem der Ansprüche 2 bis 6, **dadurch gekennzeichnet, dass** der granulometrische Faktor der Calciumcarbonat-Teilchen höchstens 3,5 ist.

8. Hohlfaser nach mindestens einem der Ansprüche 2 bis 7, **dadurch gekennzeichnet, dass** die Calciumcarbonat-Teilchen mit mindestens einem Beschichtungsmittel beschichtet sind.

9. Hohlfaser nach mindestens einem der Ansprüche 2 bis 8, **dadurch gekennzeichnet, dass** das Gewichtsverhältnis von Polymer zu Calciumcarbonat im Bereich von 95:5 bis 50:50 liegt.

10. Verfahren zur Herstellung einer Hohlfaser nach mindestens einem der Ansprüche 2 bis 9, **dadurch gekennzeichnet, dass** man eine Zusammensetzung, umfassend das Polymer und die Calciumcarbonat-Teilchen unter Verwendung einer Düse zur Bildung von Hohlfasern schmelzspinnt.

11. Verfahren zur Herstellung einer porösen Hohlfaser nach Anspruch 1, **dadurch gekennzeichnet, dass** man eine Hohlfaser nach mindestens einem der Ansprüche 2 bis 9 auf eine Dehnung größer 50 % verstreckt, bezogen auf die Ausgangslänge der Hohlfaser.

12. Verfahren nach Anspruch 11, **dadurch gekennzeichnet, dass** man die Hohlfaser bei einer Temperatur im Bereich von 100°C bis 165°C verstreckt.

13. Verfahren nach Anspruch 11 oder 12, **dadurch gekennzeichnet, dass** die Deformationsrate während des Verstreckens nicht mehr als 10 % pro Sekunde beträgt.

14. Verfahren nach mindestens einem der Ansprüche 11 bis 13, **dadurch gekennzeichnet, dass** man nach dem Verstrecken die Calciumcarbonat-Teilchen aus der Hohlfaser zumindest teilweise entfernt.

15. Verwendung einer porösen Hohlfaser nach Anspruch 1 in Füllungen, in selektiv permeablen Membranen, für die Immobilisierung von Enzymen und/oder Zellen, zur Hämodialyse sowie zur Speicherung von Wasserstoff.

Fig. 1

Europäisches Patentamt
European Patent Office
Office européen des brevets

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 4 664 681 A (ANAZAWA TAKANORI [JP] ET AL) 12. Mai 1987 (1987-05-12) <br> * Ansprüche 1-16; Beispiele 1-16 * <br> ----- | 1-15 | INV. <br> B01D67/00 <br> B01D69/08 <br> B01D69/14 <br> D01D5/24 |
| X | US 5 547 756 A (KAMO JUN [JP] ET AL) 20. August 1996 (1996-08-20) <br> * Ansprüche 1-14; Beispiele 1-5 * <br> ----- | 1-15 | |
| X | DE 38 21 591 A1 (UBE INDUSTRIES [JP]) 5. Januar 1989 (1989-01-05) <br> * das ganze Dokument * <br> ----- | 1,10 | |

RECHERCHIERTE SACHGEBIETE (IPC)

B01D
D01D

Der vorliegende Recherchenbericht wurde für alle Patentansprüche erstellt

| Recherchenort | Abschlußdatum der Recherche | Prüfer |
|---|---|---|
| München | 22. Oktober 2010 | Luethe, Herbert |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument
 
& : Mitglied der gleichen Patentfamilie, übereinstimmendes
   Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 10 00 8206

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-10-2010

| Im Recherchenbericht angeführtes Patentdokument | | Datum der Veröffentlichung | Mitglied(er) der Patentfamilie | | Datum der Veröffentlichung |
|---|---|---|---|---|---|
| US 4664681 | A | 12-05-1987 | DE | 3481587 D1 | 19-04-1990 |
| | | | EP | 0124028 A2 | 07-11-1984 |
| | | | JP | 1616519 C | 30-08-1991 |
| | | | JP | 2038250 B | 29-08-1990 |
| | | | JP | 59196706 A | 08-11-1984 |
| US 5547756 | A | 20-08-1996 | KEINE | | |
| DE 3821591 | A1 | 05-01-1989 | AU | 601599 B2 | 13-09-1990 |
| | | | CA | 1315929 C | 13-04-1993 |
| | | | IT | 1219400 B | 11-05-1990 |
| | | | US | 4859535 A | 22-08-1989 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5232642 A
- US 6890436 B
- EP 0168783 A1
- US 5435955 A
- WO 2007068593 A

**In der Beschreibung aufgeführte Nicht-Patentliteratur**

- **S. NAGO ; Y. MIZUTANI.** Microporous Polypropylene Hollow Fibers Containing Calcium Carbonate Fillers. *J. Electron Microsc.,* 1993, vol. 42, 407-411
- **K. ABROL ; G. N. QAZI ; A. K. GHOSH.** Characterization of an anionexchange porous polypropylene hollow fiber membrane for immobilization of ABL lipase. *Journal of Biotechnology,* 2007, vol. 128, 838-848
- **L. MEI ; D. ZHANG ; Q. WANG.** Morphology Structure Study of Polypropylene Hollow Fiber Membrane Made by the Blend-Spinning and Cold-Stretching Method. *Journal of Applied Polymer Science,* 2002, vol. 84, 1390-1394
- **M. SAKAI ; S. MATSUNAMI.** The Structure and Characteristics of Polypropylene Hollow Fiber Membrane Plasma Separator. *Therapeutic Apheresis and Dialysis,* Juli 2003, vol. 1, 69-72
- **S. NAGO ; Y. MIZUTANI.** Microporous Polypropylene Hollow Fibers with Double Layers. *Journal of Applied Polymer Science,* 1995, vol. 56, 253-261
- **B. GU ; Q. DU ; Y. YANG.** Microporous hollow fiber membranes formed from blends of isotactic and atactic polypropylene. *Journal of Membrane Science,* 2000, vol. 164, 59-65
- **S. NAGO ; Y. MIZUTANI.** Microporous Polypropylene Fibers Containing CaCO3 Filler. *Journal of Applied Polymer Science,* 1996, vol. 62, 81-86
- **S. NAGO ; Y. MIZUTANI.** Microporous Polypropylene Hollow Fibers Containing Calcium Carbonate Fillers J. *Electron Microsc.,* 1993, vol. 42, 407-411
- **T. SCHIMANSKI ; J. LOOS ; T. PEIJS ; B. ALCOCK ; P. J. LEMSTRA.** On the Overdrawing of Melt-Spun Isotactic Polypropylene Tapes. *Journal of Applied Polymer Science,* 2007, vol. 103, 2920-2931
- **J.-J. KIM ; T.-S. JANG ; Y.-D. KWON ; U. Y. KIM ; S. S. KIM.** Structural study of microporous polypropylene hollow fiber membranes made by the melt-spinning and cold-stretching method. *Journal of Membrane Science,* 1994, vol. 93, 209-215
- **C.-A. LIN ; H.-C. TSAI ; T.-C. AN ; C.-C. TUNG.** *Hollow Porous Polypropylene Fibers with Polyvinyl Alcohol by Melt Spinning,* 15. August 2007, http://dspace.lib.fcu.edu.tw/bitstream/2377/3879/1/ce05atc902007000008.pdf
- **HANS-GEORG ELIAS.** Makromoleküle Weinheim. Wiley-VCH, 2003, vol. 4
- Anwendungen von Polymeren. Fäden und Gewebe. 154-243
- Synthetische Fasern - Herstellung, Maschinen und Apparate, Eigenschaften. **FRANZ FOURNÉ.** Handbuch für Anlagenplanung, Maschinenkonstruktion und Betrieb München. Hanser, 1995
- Synthetische Fasern: Herstellung, Maschinen und Apparate, Eigenschaften. **FRANZ FOURNÉ.** Handbuch für Anlagenplanung, Maschinenkonstruktion und Betrieb. Hanser Verlag, 1995